# EUROPÄISCHE PATENTSCHRIFT

(11) **EP 0 485 706 B1**
(45) Veröffentlichungstag und Bekanntmachung des Hinweises auf die Patenterteilung: **14.12.1994**
(21) Anmeldenummer: 91115490.4
(22) Anmeldetag: 12.09.1991
(51) Int. Cl.: F16L 47/00

(54) **Sanitär- und Heizungsrohrsystem, vollständig oder überwiegend bestehend aus Kunststoff, insbesondere Polypropylen, für die Wasserversorgung**
Pipe system for water supply to sanitary and heating systems, entirely or predominantly made of plastic, especially polypropylene
Réseau d'alimentation en eau sanitaire ou de chauffage constitué complètement ou principalement de matière plastique, plus specialement en polypropylène

(30) Priorität: 10.05.1991 DE 9105824 U; 15.11.1990 DE 9015675 U; 10.05.1991 DE 9105823 U; 24.04.1991 DE 9105038 U; 26.04.1991 DE 9105171 U
(43) Veröffentlichungstag der Anmeldung: 20.05.1992
(60) Teilanmeldung: 93113906.7
(73) Patentinhaber: RAFELD KUNSTSTOFFTECHNIK GmbH & Co. KG, 87640 Ebenhofen (DE)
(72) Erfinder: Rafeld, Karl, W-8954 Biessenhofen-Ebenhofen (DE)
(74) Vertreter: Kern, Wolfgang, Dipl.-Ing.

(56) Entgegenhaltungen:
- DE-U- 8 810 285
- US-A- 3 825 225

## Beschreibung

Derartige Sanitär- und Heizungsrohrsysteme werden seit längerer Zeit sowohl beim Bau von neuen Wohnhäusern als auch bei der Altbaurenovierung verwendet, da sie sich gegenüber den herkömmlichen Metallrohrsystemen insbesondere deshalb bewährt haben, weil sie keine Korrosionsprobleme mit sich bringen und sich außerdem einfacher und kostensparender montieren lassen.

Zu derartigen Systemen gehören wichtige Verbindungselemente zwischen den Kunststoffrohren und den zur Verwendung gelangenden Armaturen sowie zwischen den Rohren selbst, und zwar in Form von Übergangsstücken und Muffen. Ebenfalls dazu gehören Absperrventile aus Kunststoff mit metallenen Ventilsitzen sowie Druckverschraubungen für Heißwasser und agressive Flüssigkeiten und für den Fall der Heizkörperanbindung besondere Übergangsstücke. Des weiteren gehören zu diesem System besondere Vorrichtungen für den Zusammenbau der genannten Elemente mit den Kunststoffrohren, also Montageeinrichtungen.

Zu derartigen wesentlichen Bestandteilen des Sanitär- und Heizungsrohrsystems der erfindungsgemäßen Art gehört auch eine kunststoffummantelte, metallene Verbindungsmuffe zum Verbinden von Kunststoffrohren mit Armaturen aus metallischen Werkstoffen, bei der das eine Muffenende eine abgesetzte Bohrung zum Einschweißen eines Kunststoffrohres und das andere Muffenende eine eingespritzte metallene Anschlußhülse mit einem Gewinde zum Aufschrauben einer Armatur aufweist, wobei wenigstens eine Verdrehsicherung auf der äußeren Oberfläche der Stirnseite der Anschlußmuffe vorgesehen ist, sowie sich um die äußere zylindrische Oberfläche der Anschlußmuffe erstreckende parallele Dichtungsnuten.

Für die Dichtigkeit und damit Betriebssicherheit derartiger Muffenverbindungen ist entscheidend, daß die Verbindungen zwischen dem aufgespritzten bzw. aufgegossenen Kunststoff und der metallenen Hülsenoberfläche so beschaffen ist, daß die durch die Muffe hindurch zu transportierende Flüssigkeit nicht außerhalb auf der metallenen Anschlußhülse vorbeiströmt, daß sich also zwischen dem Kunststoff, beispielsweise Polypropylen, und dem Metall keine Kriechströme bilden können, die in den Fällen, in denen die Verbindungsmuffe unter Putz verlegt wird, zu einer Durchfeuchtung des sie umgebenden Mauerwerks führen würden.

Es ist nun zwar bekannt, zur Vermeidung von derartigen Flüssigkeitskriechströmen einen Teil der äußeren Oberfläche der Anschlußhülse mit Rillen oder Nuten quadratischen oder rechteckigen Querschnitts zu versehen, in die der Kunststoff beim Aufgießen oder Aufspritzen eintritt, es hat sich aber gezeigt, daß durch die Schrumpfspannungen, denen der Kunststoff unterliegt, sich in den ursprünglich voll ausgefüllten Dichtungsnuten Hohlräume bilden, durch die Flüssigkeit hindurchkriechen kann. Ein Sanitär- und Heizungssystem nach dem Oberbegriff von Anspruch 1 oder 2 ist aus DE-U-8810285 bekannt.

Es ist deshalb Aufgabe der Erfindung, die Dichtungsnuten so auszubilden, daß trotz bestehender Schrumpfspannungen eine absolute Dichtigkeit zwischen dem Kunststoffmaterial und der Oberfläche der Anschlußhülse sichergestellt ist.

Diese Aufgabe wird durch durch die Merkmale von Anspruch 1 bzw. 2 gelost.

Ein weiteres Element des Sanitär- und Heizungssystems der erfindungsgemäßen Art bildet ein Übergangsstück zum Verbinden der Kunststoffrohre mit Armaturen aus metallischen Werkstoffen, bei dem, wie bei der oben beschriebenen Verbindungsmuffe das eine Ende eine Bohrung zum Einschweißen des Kunststoffrohres und das andere Ende eine eingespritzte metallene Anschlußhülse mit einem Gewinde zum Auf- bzw. Einschrauben der Armatur aufweist und außerdem eine Verdrehsicherung in bezug auf einen die Anschlußhülse umgebenden Kunststoffkörper vorgesehen ist, die aus in dem stirnseitigen inneren Ende der Anschlußhülse angebrachten Vertiefungen in Form von Schlitzen, Bohrungen u. dgl. besteht, in die der aufgespritzte Kunststoff eindringt, wobei ferner auf der zylindrischen äußeren Oberfläche der metallenen Anschlußhülse Ringnuten ausgebildet sind, in die der aufgespritzte Kunststoff ebenfalls eindringt.

Auch hier hat sich gezeigt, daß die Verankerung der auf die Anschlußhülsenoberfläche aufgespritzten Kunststoffmasse in den Ringnuten aufgrund der bei der Verfestigung des Kunststoffmaterials auftretenden Schrumpfspannungen zu wünschen übrig läßt, so daß es auch hier durch Flüssigkeitskriechströme zu Undichtigkeiten kommt, die erfindungsgemäß dadurch vermieden werden, daß bei diesem Übergangsstück ebenfalls die Ringnuten einen V-förmigen Querschnitt erhalten.

Vorteilhafte Ausgestaltungen der Erfindung sind in den Unteransprüchen gekennzeichnet.

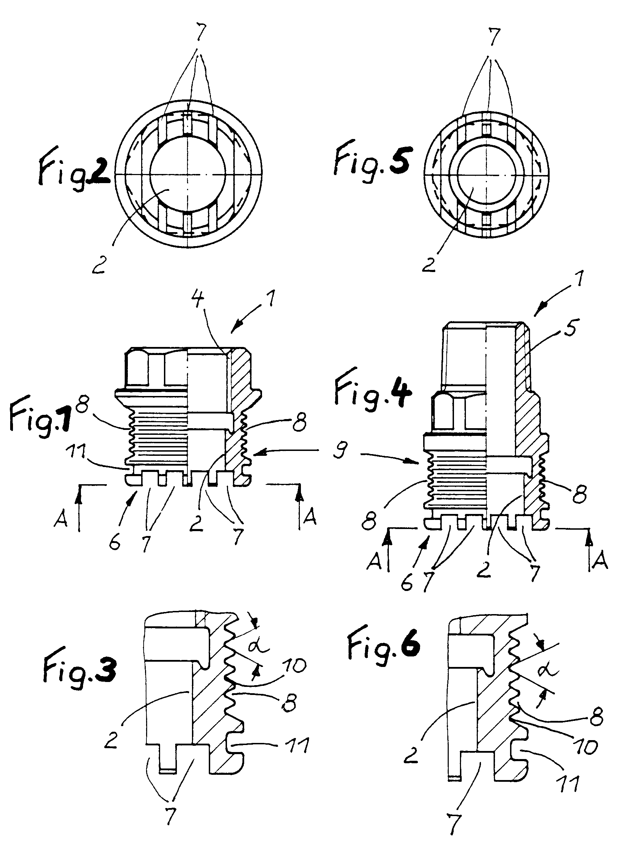

Die Erfindung wird nachfolgend an Hand der in der Zeichnung dargestellten Ausführungsbeispiele näher erläutert. In der Zeichnung zeigen:
- Fig. 1: eine teilweise längsgeschnittene, metallene Anschlußhülse ohne aufgespritzten Kunststoffmantel,
- Fig. 2: eine Stirnansicht des hinteren Endes der Anschlußhülse von Fig. 1 in Richtung der Pfeile A-A,
- Fig. 3: eine vergrößerte, geschnittene Detailansicht des die Dichtungsnuten enthaltenden, geschnittenen Teils der Anschlußhülse von Fig. 1,
- Fig. 4: eine teilweise geschnittene Seitenansicht einer mit einem Außengewinde versehenen Anschlußhülse,
- Fig. 5: eine Stirnansicht des hinteren Endes der Anschlußhülse von Fig. 4 in Richtung der Pfeile A-A,
- Fig. 6: eine vergrößerte Detailansicht des die Dichtungsnuten enthaltenden Teils der Anschlußhülse von Fig. 4,
- Fig. 7: eine Draufsicht auf das stirnseitige hintere Ende der Anschlußhülse für ein Übergangsstück,
- Fig. 8: eine Teillängsschnittansicht des Übergangsstücks von Fig. 7,
- Fig. 9: einen vergrößerten Ausschnitt der Ansicht von Fig. 8,
Die in den Fig. 1 bis 3 dargestellte metallene Anschlußhülse 1 ist mit einem Innengewinde 4 versehen, in das eine Armatur, beispielsweise ein Wasserhahn, eingeschraubt werden kann. Der zu ihrem hinteren Ende gelegene Teil ihres zylindrischen Umfangs 9 weist parallele Dichtungsnuten 8 V-förmigen Querschnitts auf, die eng nebeneinanderliegen und einen Öffnungswinkel α (Fig. 3) von 55° aufweisen, der sich für die äußere Abdichtung dieser Hülse gegen Flüssigkeitskriechströme als besonders geeignet erwiesen hat. Dies ist darauf zurückzuführen, daß der zur Herstellung der Verbindungsmuffe auf die metallene Anschlußhülse aufzugießende bzw. aufzuspritzende Kunststoff, beispielsweise Polypropylen, in die Dichtungsnuten eindringt und beim Aushärten schrumpft. Die dabei entstehenden Schrumpfspannungen sind aber im Bereich des Bodens 10 jeder V-förmigen Dichtungsnut 8 verhältnismäßig klein, weil aufgrund des V-förmigen oder konischen Zuschnitts sich am Nutboden eine vergleichsweise geringe Kunststoffmaterialmenge befindet, die zwar auch den Schrumpfspannungen unterworfen ist, jedoch aufgrund der geringen Masse zu einer vernachlässigbaren geringen Schrumpfung des Kunststoffmaterials führt, weshalb die Nuten beim Schrumpfen des Kunststoffs im wesentlichen gefüllt bleiben und damit ihre Dichtungsfunktion erfüllen können, d.h. kriechenden Flüssigkeitsströmen, die aus der Durchgangsbohrung 2 über die hintere Stirnseite 6 der Anschlußmuffe austreten und über die äußere Oberfläche der Anschlußhülse in Richtung zum vorderen Hülsenende strömen wollen, blockieren.

Die hintere Stirnseite 6 der Anschlußhülse 1 ist in an sich bekannter Weise mit Schlitzen 7 versehen, in die ebenfalls der Kunststoff eindringt, um auf diese Weise die Anschlußhülse innerhalb der Kunststoffmasse gegen Verdrehen zu sichern. Insofern bilden die Schlitze 7 eine Drehsicherung. Die Verdrehkräfte werden dadurch verursacht, daß entweder über das Innengewinde 4 oder bei der Ausführungsform nach Fig. 4 über das Außengewinde 5 beim Ein- und Ausschrauben bzw. Auf- und Abschrauben in die Anschlußhülse Drehkräfte eingeleitet werden, die von ihr, bevor sie an den die Verbindungsmuffe bei Unterputzanordnung umgebenden Mörtel weitergeleitet werden, zunächst auf den sie umgebenden Kunststoffmaterialmantel übertragen werden müssen. Dies geschieht mit Hilfe der durch die Schlitze 7 bewirkten formschlüssigen Verbindung zwischen der metallenen Anschlußhülse und dem Kunststoffmaterial.

Zusätzlich zu der Drehsicherung zwischen Anschlußhülse und Kunststoffmaterial ist auch eine feste Verbindung zwischen den beiden genannten Teilen bzw. Materialien in Form der am hinteren Ende der Anschlußhülse 3 vorhandenen, sich über den Außenumfang erstreckenden Ringnut 11 vorgesehen, in die wie bei den Dichtungsnuten 8 das Kunststoffmaterial beim Aufspritz- bzw. Aufgießvorgang ebenfalls eindringt.

Die in den Fig. 4 bis 6 dargestellte Ausführungsform der Verbindungsmuffe unterscheidet sich von der Verbindungsmuffe gemäß den Fig. 1 bis 3 im wesentlichen nur darin, daß im ersten Fall die Armatur mit Hilfe eines Innengewindes 4 in der Muffe befestigt wird, während im zweiten Fall zur Befestigung der Armatur ein Außengewinde 5 dient, das eine entsprechende Verlängerung der Anschlußhülse verlangt. Deshalb gelten die in den Fig. 1 bis 3 verwendeten Bezugszeichen auch entsprechend für die Fig. 4 bis 6.

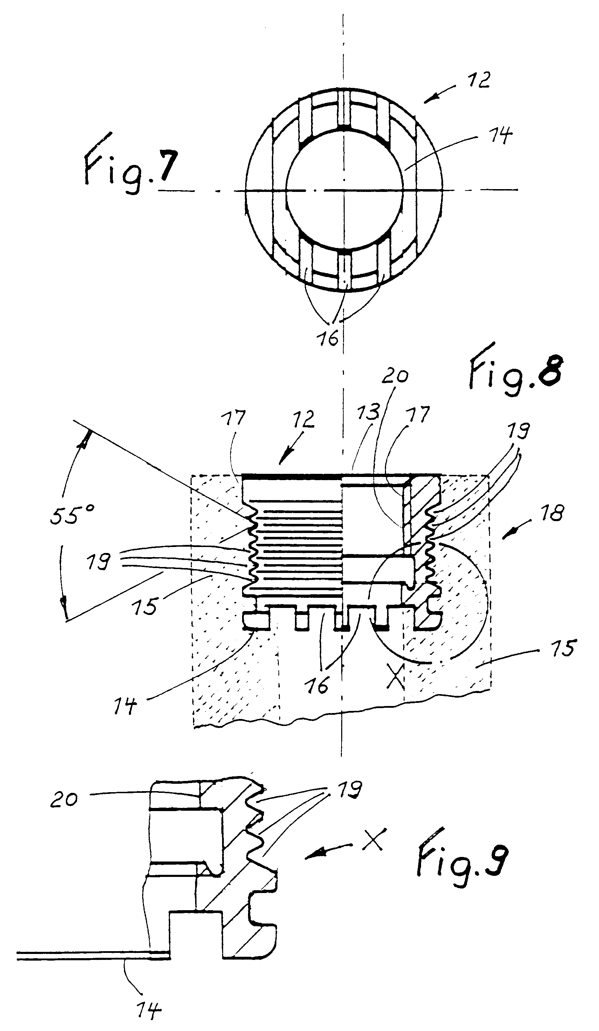

Die in den Fig. 7 bis 9 dargestellte metallene Anschlußhülse 12 besitzt eine durchgehende vernickelte Oberfläche 17 und ist Bestandteil eines Übergangsstücks 18. Zu diesem Zweck ist ihre äußere Oberfläche mit einem thermoplastischen Kunststoff 15, beispielsweise einem Polyetherketon, ummantelt, der in der Zeichnung durch eine punktierte Fläche dargestellt ist und auf die Oberfläche 17 aufgespritzt wird. Diese Oberfläche ist zwischen den beiden stirnseitigen Enden 13, 14 der Anschlußhülse auf dem zylindrischen Außenumfang mit Ringnuten 19 versehen, die eine Reihe aufeinanderfolgender paralleler konischer Rillen bilden. Der Öffnungswinkel des V-förmigen Querschnitts dieser Rillen oder Nuten beträgt ca. 55°, die Nuttiefe ca. 1,2 mm und der Abstand der aufeinanderfolgenden Nuten ca. 2 mm.

Desweiteren weist das hintere stirnseitige Ende 14 mehrere parallele Schlitze 16 auf sowie eine Bohrung zum Einschweißen eines Kunststoffrohres, das mit Hilfe des Übergangsstücks an eine Armatur aus metallischen Werkstoffen angeschlossen werden soll, die durch das vordere stirnseitige Ende 13 der Anschlußhülse hindurch in eine mit einem Gewinde versehene Bohrung 20 eingeschraubt wird.

Das Kunststoffmaterial 15 dringt beim Aufspritzen auf die Oberfläche des Anschlußstücks sowohl in die konischen Rillen oder Nuten 19 ein als auch in die stirnseitigen Schlitze 16, um die Anschlußhülse auf diese Weise in dem Kunststoffmaterial dicht und verdrehungssicher zu verankern. Die Tatsache, daß die äußere zylindrische Oberfläche 17 der Anschlußhülse mit den konischen Rillen 19 V-förmigen Querschnitts versehen ist, bewirkt, daß sich das Kunststoffmaterial, das nach dem Aufspritzen auf die Oberfläche schrumpft, nicht von der Oberfläche löst, da die Schrumpfspannungen am Rillenboden vergleichsweise gering sind, so daß das aufgespritzte Material auf der Oberfläche kleben bleibt und damit verhindert, daß Flüssigkeiten, die die Bohrung des Übergangsstücks durchströmen, auf der äußeren Oberfläche der Anschlußhülse entlangkriechen und damit das Übergangsstück undicht machen.

## Patentansprüche

1. Sanitär- und Heizungsrohrsystem, vollständig oder überwiegend bestehend aus Kunststoff, insbesondere Polypropylen, für die Wasserversorgung, mit metallenen Verbindungsmuffen zum Verbinden der Kunststoffrohre mit Armaturen aus metallischen Werkstoffen, wobei das eine Muffenende eine abgesetzte Bohrung zum Einschweißen eines Kunststoffrohres und das andere Muffenende eine eingesprizte metallene Anschlußhülse mit einem Gewinde zum Aufschrauben einer Armatur aufweist und wenigstens eine Verdrehsicherung auf der äußeren Oberfläche der Stirnseite der Verbindungsmuffe vorgesehen ist, sowie sich um die äußere, zylindrische Oberfläche der Verbindungsmuffe erstreckende parallele Dichtungsnuten, **dadurch gekennzeichnet,** daß sich die Dichtungsnuten (8) durchgehend um den gesamten Umfang der zylindrischen Oberfläche (9) der Anschlußhülse (1) erstrecken und einen konischen Querschnitt aufweisen, bei dem die aufeinander zulaufenden Wände der Dichtungsnuten (8) einen Winkel zwischen 30° und 70° einschließen, und daß der mit den Dichtungsnuten (8) versehene Teil der Umfangsoberfläche im Bereich des die Verdrehsicherung (7) aufweisenden stirnseitigen Muffenendes angeordnet ist.

2. Sanitär- und Heizungsrohrsystem, vollständig oder überwiegend bestehend aus Kunststoff insbesondere Polypropylen, für die Wasserversorgung, mit Übergangsstücken zum Verbinden der Kunststoffrohre mit Armaturen aus metallischen Werkstoffen, wobei das eine Ende des Übergangsstücks eine Bohrung zum Einschweißen des Kunststoffrohres und das andere Ende des Übergangsstücks eine eingesprizte, metallene Anschlußhülse mit einem Gewinde zum Auf- bzw. Einschrauben der Armatur aufweist und wobei die metallene Anschlußhülse mit einer Verdrehsicherung in bezug auf einen die Anschlußhülse umgebenden Kunststoffkörper versehen ist, die aus in dem stirnseitigen hinteren Ende der Anschlußhülse angebrachten Vertiefungen in Form von Schlitzen, Bohrungen besteht, in die der aufgespritzte Kunststoff eindringt und wobei ferner auf der zylindrischen, äußeren Oberfläche der metallenen Auschlußhülse Ringnuten ausgebildet sind, in die der aufgespritzte Kunststoff ebenfalls eindringt, **dadurch gekennzeichnet,** daß die Ringnuten (19) einen V-förmigen Querschritt aufweisen, dessen Öffnungswinkel ca. 55° beträgt bei einer Nuttiefe von ca. 1,2 mm und einem Abstand der aufeinanderfolgenden Nuten von ca. 2 mm.

## Claims

1. Plumbing and heating pipe system for water supply purposes, made substantially of plastic material, especially polypropylene, comprising metallic connecting sleeves for the connection of the plastic pipes to fittings made of metallic materials, in which one sleeve end includes an offset bore for welding a plastic pipe therein and the other sleeve end includes an injection-moulded metallic connecting sleeve provided with a screw threat bore screwing onto a fitting, and there being provided at least one anti-twist means on the outer surface of an end face of the connecting sleeve as well as parallel sealing grooves extending about the outer cylindrical surface of the connecting sleeve, **characterized in that** the sealing grooves (8) extend continuously around an entire circumference of the cylindrical surface (9) of the connecting sleeve (1) and are provided with a conical cross section, wherein the converting wall of the sealing grooves (8) include and angle of from 30 to 70 there between and that the portion of the circumferential surface provided with said seal grooves (8) is disposed adjacent to the sleeve end near an end face which is provided with said anti-twist means (7).

2. Plumbing and heating pipe system for water supply purposes, made substantially of plastic material, especially polypropylene, comprising transition pieces for the connection of the plastic pipes to fittings made of metallic materials, in which one end of the transition piece is provided with a bore for welding the plastic pipe therein, and the other end of said transition piece includes an injection-moulded metallic connecting sleeve provided with the screw thread for screwing onto or into, respectively, the fitting and wherein the metallic connecting sleeve is provided with at least one anti-twist means with respect to a plastic body surrounding said connecting sleeve, which anti-twist means consisting of recesses configured as slots, bores, provided within the front face of the back side and of the connecting sleeve, into which recesses the injection moulded plastic material penetrates, and wherein moreover annular grooves are formed on the cylindrical outer surface of the metallic connecting sleeve, in which the injection-moulded plastic material is also penetrating, **characterized in that** the annular grooves (19) are provided with V-shaped cross-section, the opening angle thereof is about 55 , having a groove depth of about 1,2 mm and a pitch of about 2 mm between adjacent grooves.

## Revendications

1. Système de canalisations sanitaires et de chauffage, entièrement ou principalement en matière plastique, en particulier en polypropylène, pour l'alimentation en eau, comportant des manchons de raccordement métalliques pour raccorder des canalisations en matière plastique à des appareils de robinetterie en matériaux métalliques, l'une des extrémités du manchon présentant un alésage réduit pour le soudage d'une canalisation en matière plastique et l'autre extrémité du manchon, une douille de raccordement métallique injectée avec un pas de vis pour le vissage d'un appareil de robinetterie et au moins un moyen de blocage de la rotation étant prévu sur la surface externe de la face d'about du manchon de raccordement de même que des rainures d'étanchéité parallèles s'étendant autour de la surface cylindrique extérieure du manchon de raccord, caractérisé en ce que les rainures d'étanchéité (8) s'étendent en continu tout autour de la périphérie de la surface cylindrique (9) de la douille de raccordement (1) et présentent une section conique, les flancs successifs des rainures d'étanchéité (8) formant un angle de 30 à 70° et la partie de la surface périphérique pourvue de rainures d'étanchéité (8) est disposée dans la région de l'extrémité du manchon côté face d'about présentant le moyen de blocage de la rotation (7).

2. Système de canalisations sanitaires et de chauffage, entièrement ou principalement en matière plastique, en particulier en polypropylène, pour l'alimentation en eau comportant des raccords de réduction pour le raccordement des canalisations en matière plastique à des appareils de robinetterie en matériaux métalliques, l'une des extrémités du raccord de réduction présentant un alésage pour le soudage de la canalisation en matière plastique et l'autre extrémité du raccord de réduction présentant une douille de raccordement métallique injectée avec un pas de vis pour le vissage externe ou interne de l'appareil de robinetterie et la douille de raccordement métallique étant pourvue d'un moyen de blocage de la rotation par rapport à un corps en matière plastique entourant la douille de raccordement, qui se compose d'évidements en forme de fentes ou d'orifices ménagés dans l'extrémité postérieure côté face d'about de la douille de raccordement, dans lesquels pénètre la matière plastique injectée, la surface externe cylindrique de la douille de raccordement métallique présentant, en outre, des rainures circulaires dans lesquelles pénètre également la matière plastique injectée, caractérisé en ce que les rainures circulaires (19) ont une section en V dont l'angle d'ouverture s'élève à environ 55° pour une profondeur de rainure d'environ 1,2 mm et un écartement des rainures successives d'environ 2 mm.
